Europäisches Patentamt

European Patent Office

Office européen des brevets

(11) Veröffentlichungsnummer: **0 308 521 B1**

(12) **EUROPÄISCHE PATENTSCHRIFT**

(45) Veröffentlichungstag der Patentschrift: **23.10.91**

(51) Int. Cl.⁵: **C13D 3/14**, B01J 49/00

(21) Anmeldenummer: **87113736.0**

(22) Anmeldetag: **19.09.87**

(54) **Verfahren zur Entfernung von störenden organischen Stoffen und anorganischen Anionen aus Zuckerlösungen.**

(43) Veröffentlichungstag der Anmeldung:
**29.03.89 Patentblatt 89/13**

(45) Bekanntmachung des Hinweises auf die
Patenterteilung:
**23.10.91 Patentblatt 91/43**

(84) Benannte Vertragsstaaten:
**AT BE CH DE FR GB LI NL**

(56) Entgegenhaltungen:
EP-A- 0 020 124      EP-A- 0 106 466
GB-A- 2 060 429      US-A- 2 561 695
US-A- 4 193 817      US-A- 4 252 571

(73) Patentinhaber: **KERNFORSCHUNGSZENTRUM KARLSRUHE GMBH**
**Weberstrasse 5 Postfach 3640**
**W-7500 Karlsruhe 1(DE)**

(72) Erfinder: **Höll, Wolfgang, Dr.**
**Am Horbach 9**
**W-7505 Ettlingen(DE)**
Erfinder: **Nagel, Sabine**
**Brettener Strasse 14**
**W-7500 Karlsruhe(DE)**
Erfinder: **Eberle, Siegfried, Prof. Dr.**
**Luistenstrasse 14**
**W-7514 Eggenstein(DE)**

## Beschreibung

Die Erfindung betrifft ein Verfahren zur Entfernung von störenden organischen Stoffen, insbesondere Farbstoffen und Aminosäuren, und anorganischen Anionen aus Zuckerlösungen mit Hilfe von Ionenaustauschermaterial, das einen beladenen Anionenaustauscher enthält oder aus einem solchen besteht, und zur anschließenden Regenerierung des Ionenaustauschermaterials.

Die Entfernung von Farbstoffen, Eiweißspaltprodukten und anorganischen Anionen wie Sulfaten und Phosphaten mit Hilfe von Anionenaustauschern ist seit langem bekannt (Schneider, Technologie des Zuckers, Verlag M. & H. Schaper, Hannover (1968) und W. Fries, Int. Sugar Jnl., Vol. 84, No. 1007, Seite 325 (1982)). Hierbei werden Anionenaustauscher auf Polystyroloder Polyacrylamidbasis verwendet.

Vielfach wird die Reinigung von Zuckerlösungen in zwei Stufen durchgeführt. In der ersten Stufe entfernt ein schwach bis mittelstark basischer Austauscher vor allem die höhermolekularen Substanzen, während in der zweiten Stufe ein stark basischer Austauscher eingesetzt wird, der vor allem die niedermolekularen Stoffe entfernt.

Die Anionenaustauscher werden häufig in der Chloridform eingesetzt. Die Farbstoffentfernung erfolgt dabei nicht durch einen Ionenaustauschprozeß, sondern beruht auf einem Adsorptionsvorgang, bei dem die Farbstoffmoleküle an das Polymergerüst des Ionenaustauschers angelagert werden. Wegen der niedrigen Energie der Sorption der Farbstoffe können diese verhältnismäßig leicht wieder abgelöst werden, so daß die Austauscher wiederverwendbar sind.

Die Regenierung erfolgt mit einer schwach alkalischen oder schwach sauren 7 - 10 %igen Natriumchloridlösung, wobei pro m³ Harz 70 bis 100 kg NaCl angewendet werden müssen.

Nach W. Fries besteht zwar die Möglichkeit, die in der Regenerierlösung enthaltenen Farbstoffe mit Natriumhypochlorid oder Ozon zu zerstören und die Regenierlösung wiederzuverwenden. Üblicherweise wird die Regenierlösung jedoch nicht rezykliert. Sie belastet daher wegen ihres Salzgehaltes das Abwasser der Zuckerproduktion.

Außer den störenden organischen Stoffen und anorganischen Anionen müssen aus den Zuckerlösungen jedoch auch Alkalimetallionen entfernt werden.

Dies erfolgt üblicherweise durch die Verwendung von Kationenaustauschern, die mit Magnesium beladen sind. Auch diese Kationenaustauscher müssen regeneriert werden, wozu z. B. Magnesiumchlorid verwendet werden kann. Auch hierbei wird das Abwasser der Zuckerfabrikation stark belastet.

Aus der EP-A-0 106 466 ist ein Verfahren der eingangs genannten Art bekannt, mit dessen Hilfe Verunreinigungen, insbesondere solche Verunreinigungen, die Trübungen verursachen, aus Zuckersirup entfernt werden können. Dem Verfahren muß eine Reinigung des Zuckersirups mit einem Kationenaustauscher vorgeschaltet sein. Das Verfahren sieht vor, einen oder mehrere spezielle, stark oder schwach basische Anionenaustauscher mit dem Zuckersirup in Kontakt zu bringen, wobei die Verunreinigungen an den Anionenaustauschern adsorbiert werden. Weiterhin wird eine Regenerierung der verwendeten Anionenaustauscher vorgesehen. Als Regenerierungsmittel für die stark basischen Anionenaustauscher werden verdünnte Chlorid-Salzlösungen und verdünnte oder konzentrierte Lösungen von Salzsäure, eventuell unter Zusatz von Alkoholen vorgeschlagen. Zur Regenerierung der schwach basischen Anionenaustauscher werden Alkalimetalloder Ammoniumhydroxidlösungen oder die entsprechenden Carbonatlösungen vorgeschlagen.

Die zur Regenerierung verwendeten Chlorid-, Alkalimetall- und Ammoniumionen belasten das Abwasser.

Ferner muß dieses Verfahren in zwei Stufen durchgeführt werden: Vorgeschaltet ist die Behandlung des Zuckersirups mit einem Kationenaustauscher, der ebenfalls wieder regeneriert werden muß. Erst danach kann das erwähnte Verfahren durchgeführt werden.

Aus der GB-A-2060429 ist ein Verfahren zur Regenerierung von schwach basischen Ionenaustauschern bekannt. Es wird darauf hingewiesen, daß schwach basische Ionenaustauscher zur Entfernung von Salzen und schwach sauren, gefärbten Substanzen aus Zuckersirup geeignet sind.

Die Regeneration von für diesen Zweck verwendeten, erschöpften Ionenaustauschern verläuft nach dieser Druckschrift in fünf Schritten:
Der Ionenaustauscher wird zuerst durch Wasser von der Zuckerlösung befreit. Danach wird der Ionenaustauscher von festen Partikeln befreit, indem die Säule des Ionenaustauschers von unten nach oben mit Wasser gespült wird. Anschließend wird der Ionenaustauscher mit Hilfe von NaOH-, $Na_2CO_3$- oder $NH_3$-Lösungen regeneriert.

An die Regenerierung schließt sich eine Wäsche des Ionenaustauschers an, bei der das Regenerierungsmittel ausgespült wird. Diese Wäsche wird mit Wasser vorgenommen. Mit weiterem Wasser werden schließlich noch enthaltenes Regenerierungsmittel und Abfallstoffe herausgespült. Die genannte Druckschrift schlägt nun vor, den letztgenannten Schritt nicht mit reinem Wasser, sondern mit einer Lösung von Kohlendioxid in Wasser vorzunehmen.

Vorzugsweise wird diese Lösung durch Einlei-

ten von $CO_2$ in Wasser bei Umgebungsbedingungen für Druck und Temperatur hergestellt.

Hinsichtlich der eigentlichen Regenerierung des Ionenaustauschers geht die Druckschrift nicht über die Lehre der oben zitierten EP-A-0 106 466 hinaus.

Ferner ist aus der EP-A-0 020 124 ein Verfahren zur Entfernung von Kationen aus einer wäßrigen Zuckerlösung bekannt, bei dem die Lösung diskontinuierlich mit einem stark sauren Kationenaustauscher in der Wasserstoff-Form oder einer Mischung eines schwach sauren Kationenaustauschers in der Wasserstoff-Form und einem Anionenaustauscher in der Hydroxyl-Form in Kontakt gebracht wird, wobei spezielle Bedingungen hinsichtlich der Temperatur und der Kontaktzeit eingehalten werden. Bei diesem Verfahren kann auch eine zumindest teilweise Entfärbung der Zuckerlösung erreicht werden.

Der Kationenaustauscher soll mit einer Lösung einer starken Mineralsäure, der Anionenaustauscher hingegen mit einer Lösung einer starken Base regeneriert werden.

Für den Fall, daß eine Mischung aus Kationenaustauscher und Anionenaustauscher verwendet wird, müssen diese Austauscher zur Regenerierung voneinander getrennt werden.

Der Erfindung liegt die Aufgabe zugrunde, ein Verfahren zur Entfernung von störenden organischen Stoffen und anorganischen Anionen aus Zuckerlösungen mit Hilfe von Ionenaustauschern zu schaffen, das den Einsatz von stark chloridhaltigen und somit wenig umweltfreundlichen Regenerierlösungen überflüssig macht. Weiterhin sollen die ebenfalls aus Zuckerlösungen Zu entfernenden Alkaliionen gleichzeitig und in einem Arbeitsschritt zusammen mit den störenden organischen Stoffen und anorganischen Anionen entfernt werden können. Eine weitere Aufgabe der Erfindung besteht darin, die Regenerierung des Anionenaustauschers und des Kationenaustauschers gemeinsam mit Hilfe eines einzigen Regenerierungsmittels durchzuführen, so daß die Entfernung von Metallionen, störenden organischen Stoffen und anorganischen Anionen mit einem Mischbett aus einem Kationen- und Anionenaustauscher durchgeführt werden kann, das sich ohne vorherige Trennung regenerieren läßt.

Erfindungsgemäß wird die Aufgabe dadurch gelöst, daß

a) der Anionenaustauscher mit Hydrogencarbonat beladen ist

b) zur Regenerierung der mit den störenden Organischen Stoffen und anorganischen Anionen beladene und somit erschöpfte Anionenaustauscher entweder allein oder in Kombination mit einem Kationenaustauscher mit einer wäßrigen Suspension Schwerlöslicher Carbonate und/oder Hydroxide von Erdalkalimetallen, vorzugsweise Magnesium, oder teilweise gebrannter, natürlicher Carbonate in Kontakt gebracht wird, und daß in die Suspension ein $CO_2$-haltiges oder -freisetzendes Gas eingeleitet wird.

Als Ionenaustauschermaterial kann ein stark basischer oder ein schwach basischer Anionenaustauscher evtl. in Verbindung mit einem Kationenaustauscher verwendet werden.

Eine vorteilhafte Ausbildung des erfindungsgemäßen Verfahrens ist dadurch gekennzeichnet, daß zur Regeneration des erschöpften Ionenaustauschers der $CO_2$-Partialdruck in der Suspension schwerlöslicher Carbonate und/oder Hydroxide während des Einleitens des $CO_2$-haltigen oder -freisetzenden Gases zwischen 0,01 und 1 MPa (0,1 und 10 bar) liegt.

Das $CO_2$-haltige oder freisetzende Gas kann in die wäßrige Suspension eingeleitet werden, bevor die Suspension mit dem erschöpften Ionenaustauschermaterial in Kontakt gebracht wird.

Bevorzugt wird das $CO_2$-haltige Gas in eine Suspension eingeleitet, die das erschöpfte Ionenaustauschermaterial und Carbonate oder Hydroxide von Erdalkalimetallen, vorzugsweise von Magnesium enthält.

Die bei der Regeneration vom Austauschermaterial eluierten Farbstoffe können aus der Regenerierlösung durch geeignete Methoden, z. B. mit Hilfe von Aktivkohle, entfernt werden, wonach sich die Lösung wiederverwenden läßt.

Von besonderem Vorteil ist es, daß nach dem erfindungsgemäßen Verfahren in einem Arbeitsschritt sowohl die störende organische Stoffe, insbesondere Farbstoffe und Aminosäuren, als auch Alkalimetalle und ggf. Schwermetalle entfernt werden können, wenn als Ionenaustauschermaterial ein Mischbett aus einem Anionen- und aus einem Kationenaustauscher verwendet wird. Die Regenerierung des Mischbettes kann ebenfalls in einem einzigen Verfahrensschritt durchgeführt werden.

Bei der erfindungsgemäßen Regenerierung des Anionenaustauschers werden die adsorbierten störenden organischen Stoffe und anorganischen Anionen durch Hydrogencarbonat ersetzt; gleichzeitig tauschen die vorhandenen Erdalkaliionen, vorzugsweise das Magnesium, mit den adsorbierten Schwer- oder Alkalimetallionen des erschöpften Kationenaustauschers aus, so daß das Mischbett in einem Arbeitsschritt regeneriert wird.

Das erfindungsgemäße Verfahren ist umweltfreundlich, weil zur Regenerierung keine chloridhaltigen Lösungen eingesetzt werden müssen, die das Abwasser stark belasten.

Die Erfindung wird anhand der folgenden Durchführungsbeispiele näher erläutert.

Beispiel 1:

Zur Entfärbung von mit Wasser im Volumenverhältnis 1:1 verdünnten Zuckerdicksafts wurden 0,9 Liter des stark basischen Anionenaustauschers ®AMBERLITE IRA 958 eingesetzt. Der Austauscher ist makroporös und auf der Basis von vernetztem Polyacrylamid hergestellt. Für die Versuche wurde das Austauscherharz zunächst mit Dicksaft bis zur Erschöpfung mit Farbstoffen beladen und anschließend regeneriert. Die Versuchsdaten dieser Regeneration waren:

Regeneratvolumen: 2 x 10 Liter Wasser
$CO_2$-Druck: 0,3 MPa (3 bar)
$Mg(OH)_2$-Menge: 150 g

Im Anschluß an die Regeneration wurde der so vorbehandelte Austauscher zur Entfärbung des Zuckersaftes eingesetzt. Das Austauscherharz befand sich in einem Filter von 50 mm Durchmesser, der Durchsatz an Zuckersaft betrug 0,9 Liter/h = 1 Bettvolumen/h.

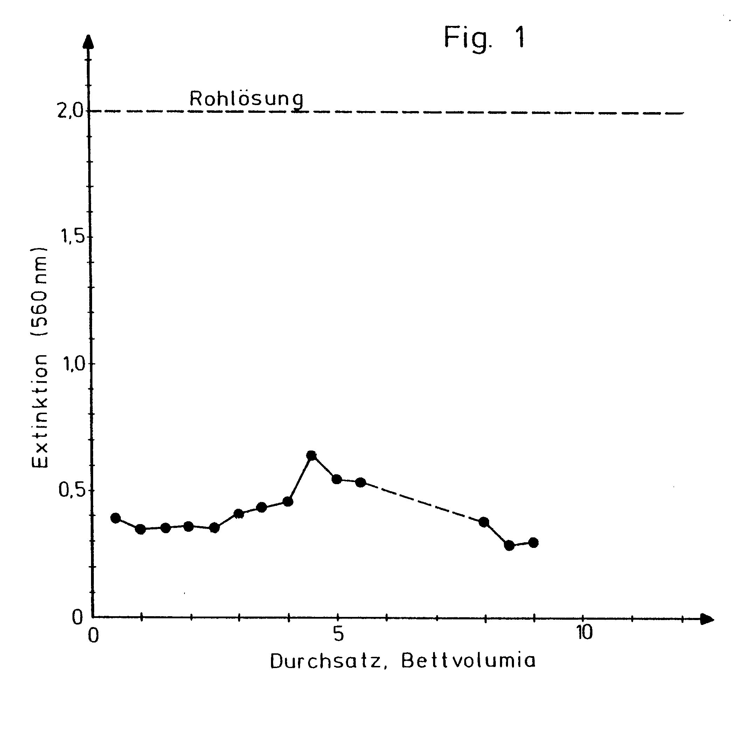

Figur 1 zeigt den Verlauf der Extinktion des Filtrats bei einer Wellenlänge von 560 nm, aufgetragen als Funktion des durchgesetzten Lösungsvolumens. Der Kurvenverlauf verdeutlicht, daß der Gehalt an Farbstoffen um etwa 80 % vermindert werden kann. Damit wird die gleiche Entfärbungsleistung wie mit NaCl-regenerierten Anionenaustauschern erzielt.

Beispiel 2:

Zur Entfärbung des mit Wasser im Volumenverhältnis 1:1 verdünnten Zuckerdicksaftes wurden 0,9 Liter des schwach basischen Anionenaustauschers ®AMBERLITE IRA 35 eingesetzt. Der Austauscher ist ebenfalls makroporös und auf der Basis von vernetztem Polyacrylamid hergestellt. Der Austauscher wurde analog zu Beispiel 1 zunächst bis zur Erschöpfung mit Farbstoffen beladen und anschließend regeneriert. Die Versuchsbedingungen in Regeneration und Arbeitszyklus waren identisch mit den in Beispiel 1 genannten Daten.

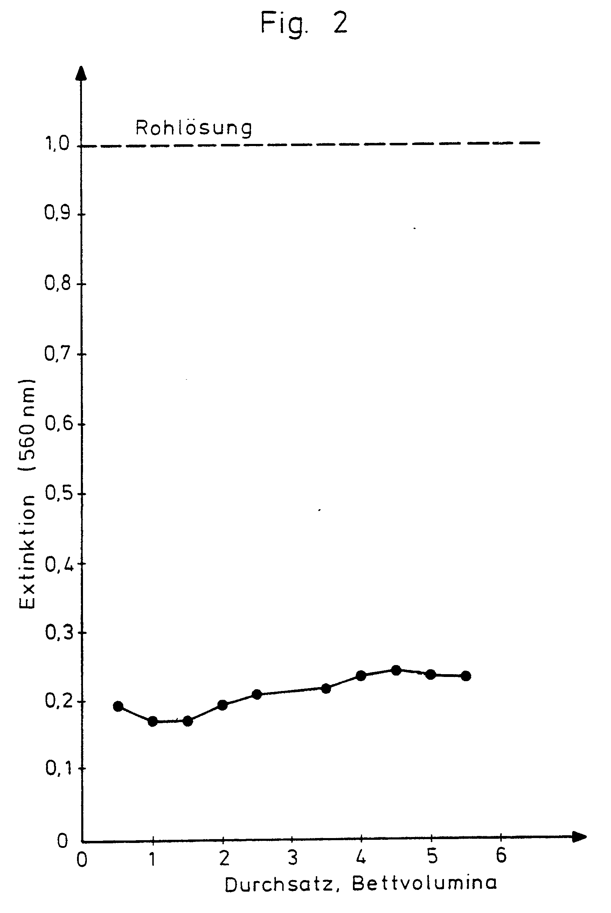

Figur 2 zeigt den Verlauf der Extinktion des Filtrats bei einer Wellenlänge von 560 nm, aufgetragen als Funktion des durchgesetzten Lösungsvolumens. Aus dem Kurvenverlauf wird deutlich, daß der Gehalt an Farbstoffen, ausgedrückt durch die Extinktion, um etwa 75 % reduziert werden kann. Auch in diesem Beispiel wird somit etwa die gleiche Entfärbungsleistung erzielt wie mit dem NaCl-regenerierten Harz.

**Patentansprüche**

1. Verfahren zur Entfernung von störenden organischen Stoffen, insbesondere von Farbstoffen und Aminosäuren, und anorganischen Anionen aus Zuckerlösungen mit Hilfe von Ionenaustauschermaterial, das einen beladenen Anionenaustauscher enthält oder aus einem solchen besteht, und zur anschließenden Regeneration des Ionenaustauschermaterials, dadurch gekennzeichnet, daß

   a) der Anionenaustauscher mit Hydrogencarbonat beladen ist,
   b) zur Regenerierung der mit den störenden organischen Stoffen und anorganischen Anionen beladene und somit erschöpfte Anionenaustauscher mit einer wäßrigen Suspension schwerlöslicher Carbonate und/oder Hydroxide von Erdalkalimetallen, oder teilweise gebrannter, natürlicher Carbonate in Kontakt gebracht wird, und daß in die Suspension ein $CO_2$-haltiges oder -freisetzendes Gas eingeleitet wird.

2. Verfahren nach Anspruch 1, dadurch gekennzeichnet, daß als Erdalkalimetall Magnesium eingesetzt wird.

3. Verfahren nach Anspruch 1, dadurch gekennzeichnet, daß als Anionenaustauscher ein stark basisches Harz verwendet wird.

4. Verfahren nach Anspruch 1, dadurch gekennzeichnet, daß als Anionenaustauscher ein schwach basisches Harz verwendet wird.

5. Verfahren nach Anspruch 1, dadurch gekennzeichnet, daß das Ionenaustauschermaterial ein Mischbett bestehend aus einem Anionen- und einem Kationenaustauscher ist.

6. Verfahren nach Anspruch 1, dadurch gekennzeichnet, daß der $CO_2$-Partialdruck in der Suspension schwerlöslicher und/oder Hydroxide während des Einleitens des $CO_2$-haltigen oder freisetzenden Gases zwischen 0,01 und 1 MPa liegt.

7. Verfahren nach Anspruch 1, dadurch gekennzeichnet, daß das $CO_2$-haltige Gas in die wäßrigen Suspension schwerlöslicher Carbonate oder Hydroxide eingeleitet wird, bevor die Suspension mit dem Austauschermaterial in Kontakt gebracht wird.

8. Verfahren nach Anspruch 1, dadurch gekennzeichnet, daß das $CO_2$-haltige Gas in eine Suspension aus erschöpftem Ionenaustauschermaterial und Carbonaten oder Hydroxiden von Erdalkalimetallen, vorzugsweise Magnesium, eingeleitet wird.

9. Verfahren nach Anspruch 1, dadurch gekennzeichnet, daß die bei der Regeneration vom Austauschermaterial eluierten Farbstoffe aus der Regenerierlösung durch geeignete Methoden, z. B. mit Hilfe von Aktivkohle, entfernt werden und die Lösung wiederverwendet wird.

## Claims

1. Method of removing unwanted organic substances, more especially dyestuffs and amino acids, and inorganic anions from sugar solutions by means of ion exchanger material, which contains a charged anion exchanger or comprises such, and for the subsequent regeneration of the ion exchanger material, characterised in that

a) the anion exchanger is charged with carbonic acid;

b) for regeneration purposes, the anion exchanger, which is charged with the unwanted organic substances and inorganic anions and is thus depleted, is brought into contact with an aqueous suspension of sparingly soluble carbonates and/or hydroxides of alkaline-earth metals or partially burnt, natural carbonates, and in that a $CO_2$-containing or $CO_2$-releasing gas is introduced into the suspension.

2. Method according to claim 1, characterised in that magnesium is used as the alkaline-earth metal.

3. Method according to claim 1, characterised in that a strongly basic resin is used as the anion exchanger.

4. Method according to claim 1, characterised in that a weakly basic resin is used as the anion exchanger.

5. Method according to claim 1, characterised in that the ion exchanger material is a mixed bed comprising an anion exchanger and a cation exchanger.

6. Method according to claim 1, characterised in that the $CO_2$ partial pressure lies between 0.01 and 1 MPa in the suspension of sparingly soluble carbonates and/or hydroxides during the introduction of the $CO_2$-containing or $CO_2$-releasing gas.

7. Method according to claim 1, characterised in that the $CO_2$-containing gas is introduced into the aqueous suspension of sparingly soluble carbonates or hydroxides before the suspension is brought into contact with the exchanger material.

8. Method according to claim 1, characterised in that the $CO_2$-containing gas is introduced into a suspension formed from depleted ion exchanger material and carbonates or hydroxides of alkaline-earth metals, preferably magnesium.

9. Method according to claim 1, characterised in that the dyestuffs, which are eluted from the exchanger material during the regeneration process, are removed from the regeneration solution by suitable methods, e.g. by means of active carbon, and the solution is re-used.

## Revendications

1. Procédé pour l'élimination de substances organiques gênantes, en particulier de colorants et d'amino-acides, et d'anions minéraux, de solutions de sucres au moyen de matériau échangeur d'ions qui renferme un échangeur d'anion chargé ou consiste en un tel matériau et par la régénération subséquente du matériau échangeur d'ion, procédé caractérisé en ce que :

a) l'échangeur d'anions est chargé avec du bicarbonate,

b) pour la régénération de l'échangeur d'anion chargé avec les substances organiques et les anions minéraux indésirables et donc épuisé, il est mis en contact avec une suspension aqueuse de carbonates et/ou d'hydroxydes de métaux alcalino-terreux peu solubles ou de carbonates naturels partiellement calcinés et en ce que l'on fait passer dans la suspension un gaz contenant ou libérant du $CO_2$.

2. Procédé selon la revendication 1, caractérisé en ce que l'on met en oeuvre comme métal alcalino-terreux, du magnésium.

3. Procédé selon la revendication 1, caractérisé en ce que comme échangeur d'anions on utilise une résine fortement basique.

4. Procédé selon la revendication 1, caractérisé en ce que l'on utilise comme échangeur d'anions une résine faiblement basique.

5. Procédé selon la revendication 1, caractérisé en ce que le matériau échangeur d'ions est un lit mixte formé d'un échangeur d'anions et d'un échangeur de cations.

6. Procédé selon la revendication 1, caractérisé en ce que la pression partielle de $CO_2$ dans la suspension de carbonates et/ou d'hydroxydes peu solubles pendant l'introduction du gaz contenant ou libérant du $CO_2$ se situe entre

0,01 et 1 MPa.

7. Procédé selon la revendication 1, caractérisé en ce que le gaz contenant du $CO_2$ est introduit dans la suspension aqueuse de carbonates ou d'hydroxydes peu solubles avant que la suspension soit mise en contact avec le matériau échangeur d'ions.

8. Procédé selon la revendication 1, caractérisé en ce que le gaz contenant du $CO_2$ est introduit dans une suspension formée de matériau échangeur d'ions épuisé et de carbonates ou d'hydroxydes de métaux alcalins - de préférence du magnésium.

9. Procédé selon la revendication 1, caractérisé en ce que les colorants élués lors de la régénération du matériau échangeur sont éliminés de la solution de régénération par des méthodes appropriées par exemple à l'aide de charbon actif, et la solution est réutilisée.

Fig. 1

## Fig. 2